(19) Europäisches Patentamt
European Patent Office
Office européen des brevets

(11) Veröffentlichungsnummer: **0 219 764 B1**

# (12) EUROPÄISCHE PATENTSCHRIFT

(45) Veröffentlichungstag der Patentschrift: **27.02.91**

(51) Int. Cl.$^5$: **C01B 21/068**

(21) Anmeldenummer: **86113935.0**

(22) Anmeldetag: **08.10.86**

## (54) Verbessertes Siliciumnitrid und Verfahren zu dessen Herstellung.

(30) Priorität: **17.10.85 DE 3536933**

(43) Veröffentlichungstag der Anmeldung:
**29.04.87 Patentblatt 87/18**

(45) Bekanntmachung des Hinweises auf die Patenterteilung:
**27.02.91 Patentblatt 91/09**

(84) Benannte Vertragsstaaten:
**CH DE FR GB LI NL SE**

(56) Entgegenhaltungen:
**EP-A- 0 063 272**
**FR-A- 1 368 568**

**PATENT ABSTRACTS OF JAPAN, Band 8, Nr. 212 (C-244) [1649], 27. September 1984; & JP-A-59 97 507 (KOGYO GIJUTSUIN (JAPAN)) 05-06-1984**

**CHEMICAL ABSTRACTS, Band 92, Nr. 18, Mai 1980, Seite 156; Zusammenfassung Nr. 149381g, Columbus, Ohio, US; & JP-A-79 160 600 (ASAHI GLASS CO.,LTD) 19-12-1979**

(73) Patentinhaber: **BAYER AG**

**D-5090 Leverkusen 1 Bayerwerk(DE)**

(72) Erfinder: **Laubach, Benno, Dr.**
**Bodelschwinghstrasse 13**
**D-4150 Krefeld 1(DE)**
Erfinder: **Franz, Gerhard, Dr.**
**Erich-Klausener-Strasse 44**
**D-4150 Krefeld 1(DE)**
Erfinder: **Wickel, Ulrike, Dr.**
**Doerperhofstrasse 39**
**D-4150 Krefeld 1(DE)**
Erfinder: **Schönfelder, Lothar, Dr.**
**Friedensstrasse 235**
**D-4150 Krefeld 1(DE)**

**EP 0 219 764 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft amorphes Siliciumnitrid mit einem Kohlenstoffgehalt unter 1000 ppm und einem Halogengehalt unter 1000 ppm, wobei die Teilchen einen mittleren Durchmesser von mehr als 0,1 bis 2,0 µm, eine im wesentlichen kugelförmige Gestalt und eine spezifische Oberfläche von mehr als 20 $m^2$ $g^{-1}$ aufweisen.

Siliciumnitrid findet zunehmende Bedeutung als keramisches Material für Anwendungen, bei denen Beständigkeit gegen hohe Temperaturen, starke Temperaturschocks und Korrosion gefordert ist. Für die Herstellung derartiger Keramiken werden $Si_3N_4$-Pulver benötigt, die in Formgebungs- und Sinterverfahren in das fertige Bauteil überführt werden. An die $Si_3N_4$-Pulver werden spezielle Anforderungen bezüglich Teilchengröße, Teilchenform, Oberflächeneigenschaften, Reinheit, Phasenzusammensetzung gestellt. Dabei beeinflussen insbesondere einige Eigenschaften den Verfahrensschritt der Formgebung, andere dagegen die Sinterbarkeit des sogenannten Grünlings zur fertigen Keramik. Wenn eine hohe Festigkeit und Zuverlässigkeit des Bauteils als Qualitätskriterien im Vordergrund stehen, so werden an das $Si_3N_4$-Ausgangsmaterial vor allen hohe Anforderungen bezüglich der Einheitlichkeit der Teilchengröße und -form und des Gehaltes an metallischen und nicht-metallischen Verunreinigungen wie z.B. Eisen, Calzium, Kohlenstoff oder Chlor gestellt.

Es sind verschiedene Verfahren zur Herstellung von Siliciumnitrid bekannt, wobei unterschiedlichste chemischen Reaktionen zum Einsatz kommen. Die Umsetzung von Siliciummetall führt zu grobteiligen Produkten, die in aufwendigen Mahlprozessen auf die erforderliche Feinheit gebracht werden müssen.

Dabei ist jedoch weder die gewünschte Reinheit erhältlich, noch kann die Freiheit von unerwünschtem Grobkorn gewährleistet werden. Eine ähnliche Problematik gilt auch für die Nitridierung von S $iO_2$-Kohlenstoffmischungen. Diese birgt zusätzlich noch den verfahrensspezifischen Nachteil hoher C-Gehalte des $Si_3N_4$ in sich.

Es wurden Versuche unternommen, $Si_3N_4$ aus Silanen oder Siliciumhalogeniden herzustellen, die auf destillativem Weg leicht von metallischen Verunreinigungen befreit werden können. So ist aus der US-A 4 196 178 ein Verfahren bekannt, bei dem $SiCl_4$ in einem organischen Lösungsmittel mit $NH_3$ zu einem Siliciumdiimid umgesetzt und dieses bei hohen Temperaturen in feinteiliges Siliciumnitrid übergeführt wird. Durch die Umsetzung in Lösungsmitteln bedingt gelangen jedoch immer Reste organischer Verbindungen in das Siliciumdiimid und führen so zu unerwünscht hohen C-Gehalten des $Si_3N_4$ (UBE Industries, Ltd., Silicon Nitride Techn. Report 1984).

Wird die Umsetzung zu Siliciumdiimid dagegen in der Gasphase vorgenommen, so kann der C-Gehalt zwar gesenkt werden, im technischen Rahmen wurden jedoch nur amorphe Produkte mit hohen spezifischen Oberflächen und Chlorgehalten oder teilamorphe Produkte mit unakzeptabel hohen Anteilen an nadelförmigen Partikeln dargestellt (SYLVANIA, Technical Information Bulletin, Towanda, US; CM-960 (2/78)).

Aus Chemical Abstracts 92/149 381 g (1980) und EP-A-0063272 sind Verfahren zur Herstellung von Siliciumnitrid bekannt, bei denen ein Siliciumhalogenid in gasförmigem Zustand mit Ammoniak in einer Gasphasenreaktion im durchströmten Rohrreaktor aus Aluminiumoxid umgesetzt wird. Das so erhältliche Siliciumnitrid weist einen unerwünscht hohen Gehalt an metallischen Verunreinigungen auf.

Die Aufgabe der vorliegenden Erfindung ist es, ein Siliciumnitrid bereitzustellen, das die vorgenannten Nachteile des Standes der Technik nicht besitzt.

Überraschenderweise wurde nun gefunden, daß diese Anforderungen hervorragend erfüllt werden durch amorphes Siliciumnitrid mit einem Kohlenstoffgehalt unter 1000 ppm und einem Halogengehalt unter 1000 ppm, wobei die Teilchen einen mittleren Durchmesser von mehr als 0,1 bis 2,0 µm, eine im wesentlichen kugelförmige Gestalt und eine spezifische Oberfläche von mehr als 20 $m^2$ $g^{-1}$ aufweisen, wobei der Gehalt an metallischen Verunreinigungen weniger als 200 ppm beträgt.

Aufgrund der hohen Reinheit dieses Produktes und seiner relativ hohen Teilchengröße und einheitlichen Teilchenform ist dieses schon als Rohstoff für die Herstellung von $Si_3N_4$-Keramiken geeignet. Dieses erfindungsgemäße amorphe Siliciumnitrid ist aber auch einsetzbar als Zwischenprodukt für die Herstellung eines neuen verbesserten Siliciumnitrid-Pulvers mit überwiegend kristalliner Phase. Dieses erfindungsgemäße Siliciumnitrid-Pulver mit einem Gehalt von mehr als 80 %, bevorzugt mehr als 90 %, kristalliner Phase, wobei minde stens 90 % der kristallinen Phase $\alpha$-$Si_3N_4$ ist, einem Halogengehalt unter 500 ppm, wobei die Einzelteilchen einen mittleren Durchmesser von 0,15 bis 2,0 µm, eine im wesentlichen kugelförmige Gestalt, eine unporöse Oberfläche aufweisen bei einer spezifischen Oberfläche von weniger als 12 $m^2$ $g^{-1}$ , wobei der Gehalt an metallischen Verunreinigungen weniger als 200 ppm beträgt. Es ist erhältlich durch eine Temperaturbehandlung des erfindungsgemäßen amorphen Siliciumnitrides.

Gegenstand der vorliegenden Erfindung ist auch ein Verfahren zur Herstellung der erfindungsgemäßen

Siliciumnitrid-Pulver.

Es wurde gefunden, daß die gewünschten hochreinen, kugelförmigen $Si_3N_4$-Partikel in einer Umsetzung von Siliciumhalogeniden mit Ammoniak bei Temperaturen über 1000° C in Rohrreaktoren aus Graphit oder Kohle erhältlich sind.

Das anfallende amorphe Zwischenprodukt kann einer Temperaturbehandlung bei 1300 bis 1600° C unter $N_2$, $N_2H_2$ oder $N_2/NH_3$-Gemischen zur Bildung des überwiegend kristallin vorliegenden Siliciumnitrid-Pulvers unterworfen werden.

Es ist zwar aus der JP-A 58 213 607 bekannt, die Umsetzung von Siliciumhalogeniden mit Ammoniak durchzuführen. Hierbei werden jedoch keramische Materialien wie Quarzgut, Quarzglas, Korund eingesetzt, die bei den erfindungsgemäß angewandten Temperaturen keine Beständigkeit besitzen. Die refraktären Metalle wie Molybdän sind unter den korrosiven Reaktionsbedingungen auch nur eine begrenzte Zeit haltbar.

Überraschenderweise wurde nun gefunden, daß als Reaktionsrohre solche aus den weichen Werkstoffen Graphit und/oder Kohle eingesetzt werden können, ohne daß Kohlenstoff in schädlichem Ausmaß in das Reaktionsprodukt eingetragen wurde. Mit diesen Materialien stehen Werkstoffe zur Verfügung, die gut bearbeitet werden können, in ausreichend großen Dimensionen herstellbar sind und unter den reduzierenden Bedingungen der Reaktion über einen sehr weiten Temperaturbereich einsetzbar sind.

Gegenstand der vorliegenden Erfindung ist somit ein Verfahren zur Herstellung des erfindungsgemäßen amorphen $Si_3N_4$ durch Umsetzung von Siliciumhalogeniden in gasförmigem Zustand mit Ammoniak in einer Gaspahsenreaktion im durchströmten Rohrreaktor bei Temperaturen von 1000 bis 1800° C, wobei als Reaktionsrohr ein von außen beheiztes Graphit- oder Kohlerohr verwendet wird, und gegebenenfalls im Reaktionsprodukt enthaltenes gebundenes Halogenid und/ oder Ammoniumhalogenid durch eine thermische Behandlung bei 900 bis 1400° C unter Inertgas, bevorzugt unter $N_2$ oder $N_2/$ $NH_3$-Gemischen, entfernt wird.

Aus der FR-A-1368568 ist die Darstellung von kompakten $Si_3N_4$-Filmen oder $Si_3N_4$-Formkörpern durch CVD-Abscheidung auf heißen Substraten und nicht zur Herstellung von feinteiligem $Si_3N_4$-Pulver bekannt. Die Verwendung von Graphit als Material bei der CVD-Abscheidung bietet als Substratmaterial z. B. den Vorteil, daß es nach Abscheidung der kompakten $Si_3N_4$-Schicht einfach durch Verbrennen entfernt werden kann. Um die pulvrige Abscheidung von $Si_3N_4$ in der Gasphase zu verhindern, wird bei geringen Partialdrücken der Ausgangskomponenten gearbeitet (Seite 2, Spalte 1, drittletzter Abschnitt), so daß eine Korrosion des Graphits kaum auftreten kann. Das Substrat kann jedoch nur einmal verwendet werden. Geringe Kohlenstoffverunreinigungen, die in das Produkt gelangen, stören in der Regel bei diesem Verfahren nicht.

Die Umsetzung der Reaktionskomponenten in der Gasphase erfolgt gemäß der Gleichung

$$3SiHal_4 + 4NH_3 \longrightarrow Si_3N_4 + 12\ HHal,$$

wobei das $Si_3N_4$ zunächst in amorpher Form mit restlicher Verunreinigung durch Chlor anfällt. Natürlich können anstelle des Siliciumhalogenides auch Halogenhydrogensilane oder Silan $SiH_4$ eingesetzt werden.

Aus Gründen der Wirtschaftlichkeit verwendet man als Siliciumhalogenid $SiCl_4$, das über destillative Verfahren auf sehr hohe Reinheiten gebracht werden kann. In technischen $SiCl_4$-Qualitäten sind Gehalte von <10 ppm an metallischen Verunreinigungen durchaus erreichbar. Das $SiCl_4$ wird verdampft und im Reaktor mit Ammoniak in Kontakt gebracht. Beide Komponenten können in den Zuleitungen zum Reaktor getrennt aufgeheizt werden. Die Reaktanden können einfach über koaxial angeordnete Rohre in den Graphitreaktor eingeleitet werden, es lassen sich aber auch spezielle Mischkammern verwenden, in denen eine schnelle Durchmischung der Gasströme erreicht wird. Das Siliciumhalogenid und/ oder der Ammoniak wird bevorzugt zusammen mit einem inerten Trägergas wie Edelgase, $N_2$, $H_2$, $N_2/H_2$-Mischungen in den Reaktor geleitet, was zum einen den Sinn hat, in der Mischzone optimale Strömungsverhältnisse zu erreichen, zum anderen läßt sich über die Menge an Inertgas natürlich die Verweilzeit im Reaktor steuern.

Die Mengen an Siliciumhalogenid und Ammoniak werden so gewählt, daß eine möglichst vollständige Umsetzung des Siliciumhalogenides erreicht wird. Dies kann je nach Reaktionsbedingungen wie Temperatur und Verweilzeit, stöchiometrische Mengenverhältnisse aber auch gegebenenfalls einen Überschuß an $NH_3$ bedeuten. Im letzteren Fall enthält das Reaktionsprodukt noch freies Ammoniumhalogenid.

Der Reaktor selbst besteht vorzugsweise aus einem Kohle- oder Graphitrohr, das sich in einem widerstandsbeheizten Ofen befindet. Bei der Wahl der geeigneten Kohle- oder Graphitsorte ist darauf zu achten, daß sie keine Verunreinigungen enthält, die bei den angestrebten hohen Temperaturen ausdampfen

und in das Produkt gelangen können. Der Ofen selbst muß natürlich wegen der bekannten Oxidationsempfindlichkeit des Graphits unter Inertgas wie Edelgasen, $N_2$, $N_2/H_2$, $H_2$ betreibbar sein und gasdicht verschlossen werden können. Als Widerstandsheizungen, die über den gesamten Temperaturbereich verwendbar sind, lassen sich z.B. Molybdän oder Kohlenstoff einsetzen. In einer speziellen Ausführungsform dient das Reaktionsrohr selbst als Widerstandsheizung.

In einer bevorzugten Ausführungsform wird ein poröses Reaktionsrohr eingesetzt, das von außen mit einem Inertgasdruck (Edelgase, $N_2$, $H_2$, $N_2/H_2$) beaufschlagt wird, der höher als der Innendruck des Reaktors ist. Dadurch wird erreicht, daß durch die Poren Gas in den Innenraum strömt und dort einen Gasfilm an der Wand ausbildet, der einen Kontakt der Reaktionsgase mit der Rohrwand verhindert.

Das hinter dem Reaktionsrohr anfallende Produkt kann in Zyklonen und nach Abkühlung in Filtersäcken aufgefangen werden. Es besteht aus amorphen Si-N-Verbindungen, je nach Reaktionsbedingungen, die meist noch gebundenes Halogen und freies Ammoniumhalogenid enthalten. Durch eine Temperaturbehandlung bei 900 bis 1400 °C in reinen Tiegelmaterialien wie Quarzgut, Quarzglas, Siliciumnitrid oder Siliciumcarbid unter Inertgasen, bevorzugt unter $N_2/NH_3$-Gemischen, kann das Ammoniumhalogenid absublimiert und das Rohprodukt in ein amorphes Siliciumnitrid mit Halogenge halten von weniger als 1000 ppm, C-Gehalten von <1000 ppm, und spezifischen Oberflächen über 20 $m^2g^{-1}$ übergeführt werden. Die spezifische Oberfläche kann in weiten Bereichen durch Temperaturführung und Verweilzeit kontrolliert werden. Das Produkt besteht aus kugelförmigen Einzelteilchen mit mittleren Durchmessern von 0,1 bis 2 µm, bevorzugt bis 1,0, µm und stellt ein herausragendes Zwischenprodukt für die Herstellung von hochreinem, kristallinem $Si_3N_4$ dar. Wie bereits beschrieben, ist es auch als Rohstoff für die Herstellung von S $i_3N_4$-Keramiken geeignet.

Die Kristallisation des amorphen $Si_3N_4$ erfolgt bevorzugt durch eine Temperaturbehandlung bei Temperaturen von 1300 bis 1700 °C unter Inertgasen wie Edelgasen, $N_2$, $N_2/H_2$-Gemischen, $NH_3$ oder N $_2/NH_3$-Gemischen. Diese Kristallisation läuft unter Erhaltung der Form der amorphen $Si_3N_4$-Einzelteilchen ab. Die genannten Temperatur-Zeit-Programme hängen außerdem von den gewünschten Produkteigenschaften, insbesondere der spezifischen Oberfläche, auch von der jeweiligen Gasatmosphäre ab. Bei reinem Stickstoff werden deutlich höhere Temperaturen oder längere Zeiten für eine vollständige Kristallisation benötigt als bei Verwendung von $N_2/H_2$-Gemischen. Vom technischen Standpunkt haben sich Temperaturen von 1350 °C bis 1550 °C und Verweilzeiten von 0,5 bis 20 h bewährt. Unter diesen Bedingungen können $Si_3N_4$-Pulver mit hohen Anteilen an kristalliner Phase über 80 %, bevorzugt über 90 %, erhalten werden. Die kristalline Phase besteht ihrerseits zu mehr als 90 % aus $\alpha$-$Si_3N_4$.

Durch die Porenfreiheit der erfindinngsgemäßen Teilchen in Verbindung mit ihrer Teilchenform und -größe ist gewährleistet, daß die Mengen an Wasser, Thermoplasten, Bindemitteln, Verflüssigern, die bei den verschiedenen Formgebungsverfahren wie Spritzguß, Schlickerguß, Pressen den keramischen Massen zugesetzt werden, nicht über das aufgrund der jeweiligen mittleren Korngröße notwendige Maß hinaus gesteigert werden müssen. Man erhält gute Verarbeitbarkeit bei geringen Mengen an Zusätzen und die Gefahr von Verunreinigungen oder von Rißbildung infolge ausdampfender Bestandteile vor oder während der Sinterprozesse sind damit verringert.

Wenn die Reinheit des amorphen Zwischenproduktes bei dem Kristallisationsprozeß erhalten bleiben soll, so müssen entsprechend reine Tiegelmaterialien verwendet werden. Es ist insbesondere schwierig, den Eintrag von Kohlenstoff auszuschließen. Besonders bevorzugt sind Gefäße aus hochreinen, auf Siliciumverbindungen aufbauenden Keramiken wie Quarzgut, Quarzglas, Siliciumnitrid oder Siliciumcarbid. Daneben besteht jedoch auch die Möglichkeit, weniger reine Gefäße einzusetzen, wenn diese oberflächlich mit dünnen Schichten reiner hochtemperaturfester Stoffe beschichtet worden sind. Als Beispiel sind insbesondere Graphitgefäße mit Beschichtungen von hochreinem $SiO_2$, $Si_3N_4$ oder SiC zu nennen, die über sogenannte chemical vapour deposition (CVD) aufgebracht werden können.

Zur Charakterisierung der Produkte werden übliche Analysemethoden angewandt. Die Ermittlung der Teilchengrößen der erfindungsgemäßen Produkte erfolgte durch Bildanalyse von REM-Aufnahmen (Raster-Elektronenmikroskop). Die BET-Oberflächen wurden durch $N_2$-Adsorption bestimmt.

Das folgende Beispiel dient zur Erläuterung der Erfindung, ohne daß darin eine Einschränkung zu sehen ist.

## Beispiel

Die beiden Reaktionsgase Ammoniak und Siliciumtetrachlorid wurden über ein Doppelrohr der Einspeisungsvorrichtung in einen Reaktor eingeleitet. Der Reaktor bestand aus einem porösen Graphitrohr mit den Abmessungen 57 x 42 x 1200 mm und wurde auf einer Länge von 800 mm mit einem elektrischen

Widerstandsofen beheizt. Das Reaktionsrohr aus Graphit wurde in ein gasdichtes Keramikrohr eingesetzt und über die poröse Graphitwand wurden 600 l/h Stickstoff in das Graphitrohr eingeleitet.

Der Reaktor wurde auf 1100 °C aufgeheizt und gleichzeitig 72,8 g/h Siliciumtetrachlorid und 10,6 g/h Ammoniak eingeleitet. Die Reaktion wurde kontinuierlich durchgeführt und das feinteilige Reaktionsprodukt in einem Abscheidesystem, bestehend aus zwei Zyklonen und einem Schlauchfilter, gesammelt.

Zur Entfernung von restlichem Chlor wurde das Reaktionsprodukt bei 1100 °C sechs Stunden in einer Atmosphäre aus Ammoniak und Stickstoff (Volumenverhältnis 1:1) behandelt.

Das röntgenamorphe weiße $Si_3N_4$-Pulver besaß danach folgende analytische Daten:

| | |
|---|---|
| Cl: | 0,05 Gew.-% |
| C : | 0,068 Gew.-% |
| Spez. Oberfläche (BET): | 235 $m^2/g$ |
| | Rasterelektronenmikroskopische Aufnahme (Fig. 1). |

Zur Kristallisation wurde das amorphe Reaktionsprodukt bei 1450 °C zwölf Stunden in einem Quarzbehälter in einer Stickstoffatmosphäre getempert.

Das kristalline $Si_3N_4$-Pulver besaß folgende analytische Daten:

Si: 58,2 Gew.-%
N: 38,9 Gew.-%
Cl: 0,005 Gew.-%
C: 0,049 Gew.-%
$\alpha$-$Si_3N_4$ = 100 %
Spez. Oberfläche (BET): 3,0 $m^2/g$
Mittlerer Teilchendurchmesser: 0,2 $\mu m$
Rasterelektronenmikroskopische Aufnahme (Fig. 2).

**Ansprüche**

1. Amorphes Siliciumnitrid mit einem Kohlenstoffgehalt unter 1000 ppm und einem Halogengehalt unter 1000 ppm, wobei die Teilchen einen mittleren Durchmesser von mehr als 0,1 bis 2,0 $\mu m$, eine im wesentlichen kugelförmige Gestalt und eine spezifische Oberfläche von mehr als 20 $m^2\ g^{-1}$ aufweisen, dadurch gekennzeichnet, daß der Gehalt an metallischen Verunreinigungen weniger als 200 ppm beträgt.

2. Siliciumnitrid-Pulver mit einem Gehalt von mehr als 80 %, bevorzugt mehr als 90 %, kristalliner Phase, wobei mindestens 90 % der kristallinen Phase $\alpha$-$Si_3N_4$ ist, einem Halogengehalt unter 500 ppm, wobei die Einzelteilchen einen mittleren Durchmesser von 0,15 bis 2,0 $\mu m$, eine im wesentlichen kugelförmige Gestalt, eine unporöse Oberfläche aufweisen bei einer spezifischen Oberfläche von weniger als 12 $m^2\ g^{-1}$, dadurch gekennzeichnet, daß der Gehalt an metallischen Verunreinigungen weniger als 200 ppm beträgt.

3. Verfahren zur Herstellung von amorphem $Si_3N_4$ gemäß Anspruch 1 durch Umsetzung von Siliciumhalogeniden in gasförmigem Zustand mit Ammoniak in einer Gasphasenreaktion im durchströmten Rohrreaktor bei Temperaturen von 1000 bis 1800 °C, dadurch gekennzeichnet, daß als Reaktionsrohr ein von außen beheiztes Graphit-oder Kohlerohr verwendet wird, und gegebenenfalls im Reaktionsprodukt enthaltenes gebundenes Ha logenid und/oder Ammoniumhalogenid durch eins thermische Behandlung bei 900 bis 1400 °C unter Inertgas, bevorzugt unter $N_2$ oder $N_2/NH_3$-Gemischen, entfernt wird.

4. Verfahren gemäß Anspruch 3, dadurch gekennzeichnet, daß die Verweilzeit der Reaktanden im Reaktor durch Zumischen eines inerten Trägergases zum Siliciumhalogenid und/oder Ammoniak eingestellt wird.

5. Verfahren gemäß einem der Ansprüche 3 oder 4, dadurch gekennzeichnet, daß das inerte Trägergas oder eine Teilmenge davon durch die poröse Wand des Graphit- oder Kohlerohres zugeführt wird.

6. Verfahren gemäß einem der Ansprüche 4 oder 5, dadurch gekennzeichnet, daß als Trägergas $N_2$, $H_2$, Ar oder beliebige Gemische davon verwendet werden.

7. Verfahren gemäß einem oder mehrerer der Ansprüche 3 bis 6, dadurch gekennzeichnet, daß das Reaktionsrohr aus Graphit oder Kohle als Widerstandsheizung dient.

8. Verfahren zur Herstellung von $Si_3N_4$ gemäß Anspruch 2, dadurch gekennzeichnet, daß amorphes Siliciumnitrid, erhältlich gemäß einem oder mehrerer der Ansprüche 3 bis 7, einer thermischen Behandlung bei Temperaturen von 1300 bis 1700 °C unter $N_2$, $N_2/H_2$- oder $N_2/NH_3$-Gasgemischen unterworfen wird.

9. Verfahren gemäß Anspruch 8, dadurch gekennzeichnet, daß die thermische Behandlung bei 1350 bis 1550 °C für 0,5 bis 20 h vorgenommen wird.

10. Verfahren gemäß einem der Ansprüche 8 oder 9, dadurch gekennzeichnet, daß die thermische Behandlung in Gefäßen aus hochreinem $SiO_2$, $Si_3N_4$, SiC, $Al_2O_3$, AlN, BN oder in einem mit einer dieser Materialien beschichteten Gefäß durchgeführt wird.

## Claims

1. Amorphous silicon nitride containing less than 1,000 ppm carbon and less than 1,000 ppm halogen, the particles having an average diameter of more than 0.1 to 2.0 µm, a substantially spherical shape and a specific surface of more than 20 $m^2 g^{-1}$, characterized in that the content of metallic impurities is less than 200 ppm.

2. Silicon nitride powder containing more than 80% and preferably more than 90% crystalline phase, at least 90% of the crystalline phase being $\alpha$-$Si_3N_4$, and less than 500 ppm halogen, the individual particles having an average diameter of 0.15 to 2.0 µm, a substantially spherical shape and a non-porous surface for a specific surface of less than 12 $m^2 g^{-1}$, characterized in that the content of metallic impurities is less than 200 ppm.

3. A process for the production of the amorphous $Si_3N_4$ claimed in claim 1 by reaction of gaseous silicon halides with ammonia in a gas-phase reaction carried out in a flow tube reactor at temperatures of 1,000 to 1,800 °C, characterized in that the reaction tube used is an externally heated graphite or carbon tube and any bound halide and/or ammonium halide present in the reaction product is removed by heat treatment at 900 to 1,400 °C in an inert gas atmosphere, preferably consisting of $N_2$ or $N_2/NH_3$ mixtures.

4. A process as claimed in claim 3, characterized in that the residence time of the reactants in the reactor is adjusted by addition of an inert carrier gas to the silicon halide and/or ammonia.

5. A process as claimed in claim 3 or 4, characterized in that the inert carrier gas or a part of the inert carrier gas is introduced through the porous wall of the graphite or carbon tube.

6. A process as claimed in claim 4 or 5, characterized in that $N_2$, $H_2$, Ar or mixtures thereof are used as the carrier gas.

7. A process as claimed in one or more of claims 3 to 6, characterized in that the reaction tube of graphite or carbon serves as a resistance heating element.

8. A process for the production of the $Si_3N_4$ claimed in claim 2, characterized in that amorphous silicon nitride obtainable by the process claimed in one or more of claims 3 to 7 is subjected to a heat treatment at temperatures of 1,300 to 1,700 °C in an atmosphere of $N_2$, $N_2/H_2$ or $N_2/NH_3$ gas mixtures.

9. A process as claimed in claim 8, characterized in that the heat treatment is carried out for 0.5 to 20 h at 1,350 to 1,550 °C.

10. A process as claimed in claim 8 or 9, characterized in that the heat treatment is carried out in vessels of high-purity $SiO_2$, $Si_3N_4$, SiC, $Al_2O_3$, AlN, BN or in a vessel coated with these materials.

**Revendications**

1. Nitrure de silicium amorphe à une teneur en carbone inférieure à 1 000 ppm et une teneur en halogènes inférieure à 1 000 ppm dont les particules ont un diamètre moyen supérieur à 0,1 µm et pouvant aller jusqu'à 2,0 µm et une forme essentiellement sphérique avec une surface spécifique supérieure à 20 $m^2$ $g^{-1}$ , caractérisé en ce que sa teneur en impuretés métalliques est inférieure à 200 ppm.

2. Poudre de nitrure de silicium à une teneur supérieure à 80 %, de préférence supérieure à 90 %, de phase cristalline, au moins 90 % de la phase cristalline consistant en $\alpha$-$Si_3N_4$, à une teneur en halogènes inférieure à 500 ppm, les particules individuel les ayant un diamètre moyen de 0,15 à 2,0 µm, une forme essentiellement sphérique, une surface non poreuse, une surface spécifique inférieure à 12 $m^2g^{-1}$, caractérisée en ce que la teneur en impuretés métalliques est inférieure à 200 ppm.

3. Procédé de préparation du $Si_3N_4$ amorphe de la revendication 1 par réaction d'halogénures de silicium à l'état gazeux avec l'ammoniac dans une réaction en phase gazeuse dans un réacteur tubulaire traversé par les réactifs, à des températures de 1 000 à 1 800° C, caractérisé en ce que l'on utilise en tant que tube de réaction un tube de graphite ou de carbone chauffé de l'extérieur, et on élimine l'halogénure combiné et/ou l'halogénure d'ammonium contenus éventuellement dans le produit de réaction par un traitement thermique à des températures de 900 à 1 400° C, en atmosphère de gaz inerte, de préférence en atmosphère de $N_2$ ou d'un mélange de $N_2/NH_3$.

4. Procédé selon la revendication 3, caractérisé en ce que la durée de passage des réactifs dans le réacteur est réglée par mélange d'un gaz véhicule inerte avec l'halogénure de silicium et/ou l'ammoniac.

5. Procédé selon l'une des revendications 3 ou 4, caractérisé en ce que le gaz véhicule inerte ou une partie de ce gaz est apporté au travers de la paroi poreuse du tube de graphite ou de carbone.

6. Procédé selon l'une des revendications 4 ou 5, caractérisé en ce que l'on utilise en tant que gaz véhicule $N_2$, $H_2$, Ar ou un mélange quelconque de ces gaz.

7. Procédé selon une ou plusieurs des revendications 3 à 6, caractérisé en ce que le tube de réaction consistant en graphite ou en carbone sert de chauffage à résistance.

8. Procédé de préparation du $Si_3N_4$ de la revendication 2, caractérisé en ce que l'on soumet le nitrure de silicium amorphe obtenu selon une ou plusieurs des revendications 3 à 7 à un traitement thermique à des températures de 1 300 à 1 700° C en atmosphère de $N_2$ ou d'un mélange $N_2/H_2$ ou $N_2/NH_3$.

9. Procédé selon la revendication 8, caractérisé en ce que le traitement thermique est réalisé à des températures de 1 350 à 1 550° C dans des durées de 0,5 à 20 h.

10. Procédé selon l'une des revendications 8 ou 9, caractérisé en ce que le traitement thermique est réalisé dans des récipients consistant en $SiO_2$, $Si_3N_4$, SiC, $Al_2O_3$, AIN, BN à haute pureté ou dans un récipient revêtu de l'un de ces matériaux.

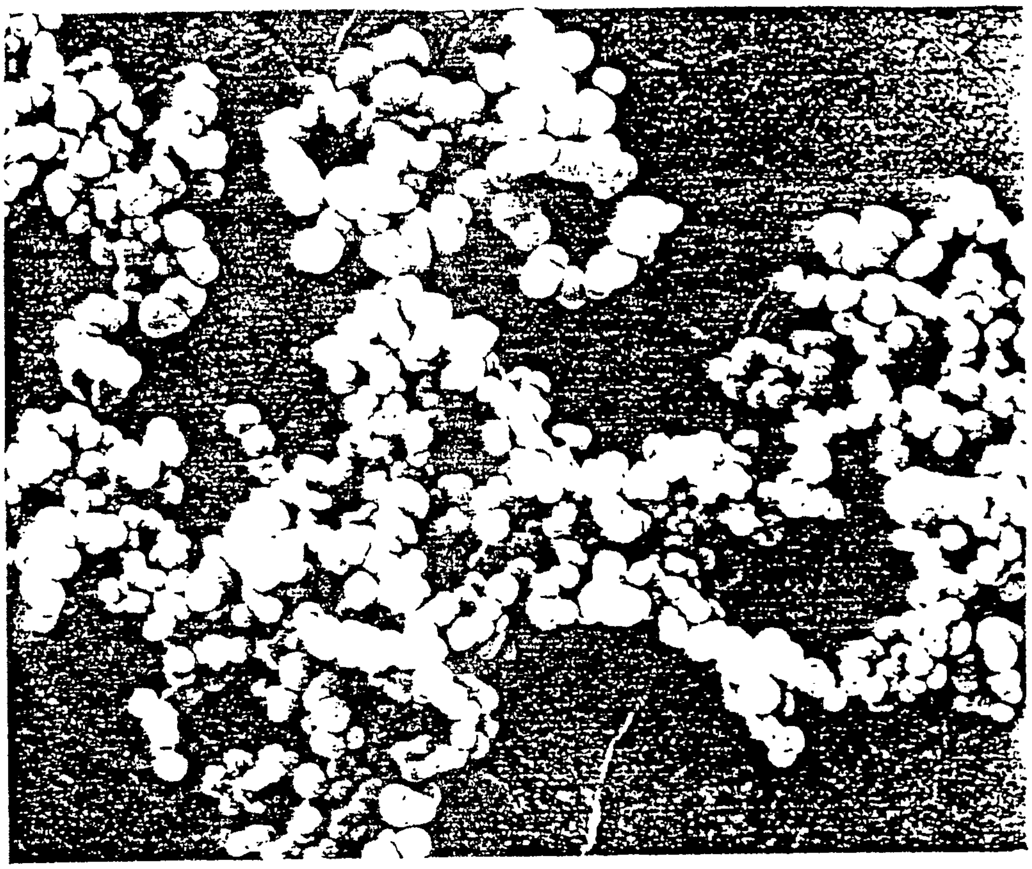

FIG. 1 Vergr. 15000 : 1

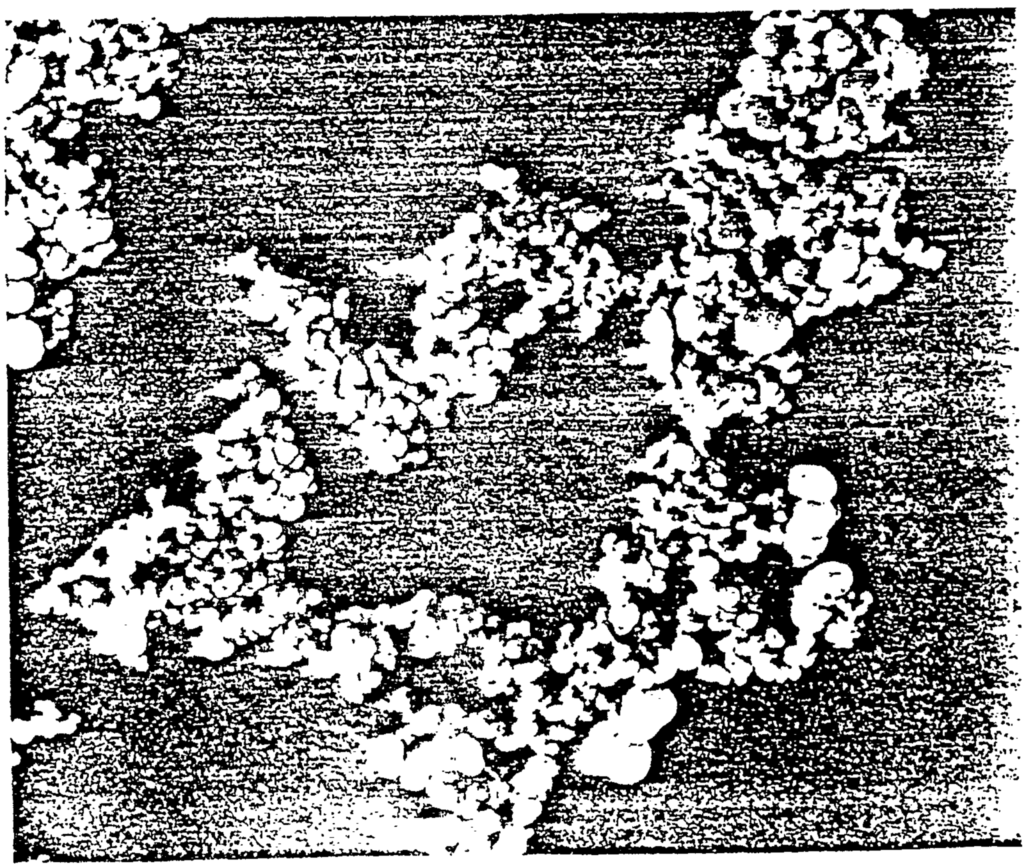

FIG. 2 Vergr. 11700 : 1